# EUROPÄISCHE PATENTANMELDUNG

(11) **EP 0 813 128 A2**
(43) Veröffentlichungstag der Anmeldung: **17.12.1997**
(21) Anmeldenummer: 97108925.5
(22) Anmeldetag: 03.06.1997
(51) Int. Cl.: G05B 19/042

(54) **Mehrfachsensor**

(30) Priorität: 10.06.1996 DE 29610157 U
(71) Anmelder: SIEMENS AKTIENGESELLSCHAFT, 80333 München (DE)
(72) Erfinder: Schmitt, Manfred, Dipl.-Ing., 92256 Hahnbach (DE)

(57) **Zusammenfassung**

Die Neuerung bezieht sich auf einen Mehrfachsensor (1) zum Anschluß an ein AS-Interface. Die elektrische Schnittstelle (8) am Gehäuse (5) ist ausschließlich an ausgelagerte Sensorköpfe (6) angepaßt.

## Beschreibung

Die Erfindung bezieht sich auf einen Mehrfachsensor zum Anschluß an ein BUS-System

Das Aktuator-Sensor-Interface (ASI) ist ein System zur Vernetzung von Sensoren und Aktuatoren im untersten Feldbereich (siehe das Aktuator-Sensor-Interface für die Automation, herausgegeben von W. Kriesel und O.W. Madelung, Carl Hanser Verlag München - Wien, 1994). Das ASI-System besteht aus einem Master, der den Datenaustausch steuert, und bis zu 31 Slave. Der Master ruft nacheinander die einzelnen Slave auf und erwartet ihre Antwort bzw. gibt die Information an sie aus. Die einzelnen Slave, der Master und das ASI-Netzteil sind über eine ungeschirmte Zweidrahtleitung als BUS-System miteinander verbunden. Da jeder Slave vier Bit Daten übertragen kann, sind pro ASI-System bis zu 124 binäre Sensoren möglich.

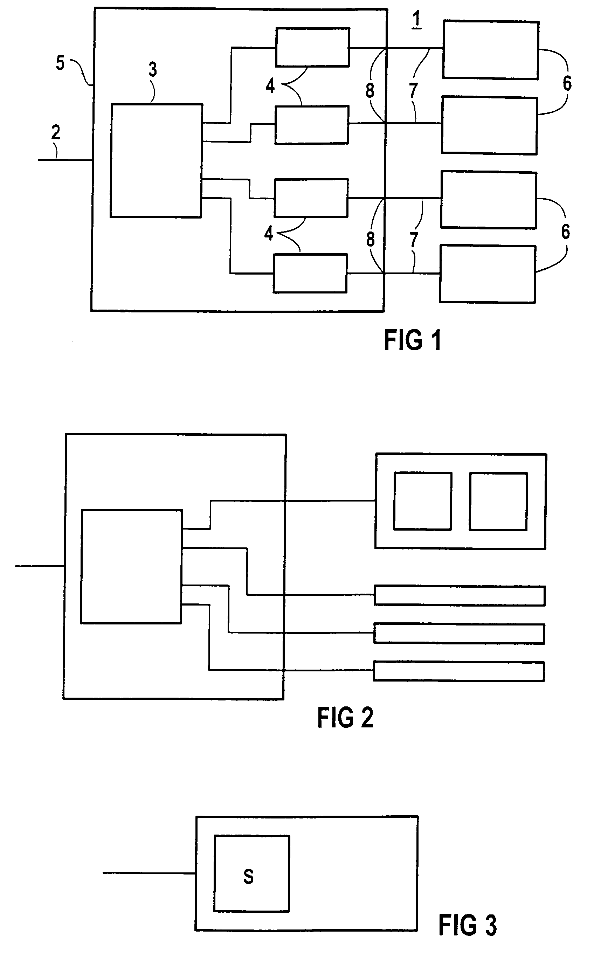

Es ist bereits bekannt, binäre Sensoren, z.B. induktive oder kapazitive Sensoren, an sogenannte Eingabemodule gemäß FIG 2 anzuschließen oder die Slave-Anschaltung S direkt in die Sensoren gemäß FIG 3 zu integrieren. Bei der ersten Variante mit Eingabe-Modulen entspricht die Schnittstelle zum Sensor der Norm für Eingabebaugruppen bei speicherprogrammierbaren Steuerungen. Zur Einhaltung der Norm ist ein entsprechender technischer Aufwand nötig. Die angeschlossenen Sensoren enthalten hier wegen der Anwendungsvielfalt neben der eigentlichen Sensorelektronik weitere Komponenten, z.B. eine Schutzbeschaltung, die in Verbindung mit den Eingabemodulen nicht nötig wäre.

Bei der zweiten Variante, d.h. der Integration der Slave-Anschaltung in den Sensor, werden bei binären Sensoren jeweils drei Bit verschenkt, d.h. die Anzahl der pro ASI-System möglichen Sensoren reduziert sich von 124 auf 31.

Der Erfindung liegt daher die Aufgabe zugrunde, eine Vielzahl von Sensoren auf einfache Weise an ein BUS-System, insbesondere an ein ASI-System, anzuschließen. Die Aufgabe wird erfindungsgemäß durch einen Mehrfachsensor mit den Merkmalen gemäß Patentanspruch 1 gelost. Dies ist ein Mehrfachsensor zum Anschluß an ein BUS-System, insbesondere an eine ASI-Leitung, mit einer Slave-Anschaltung zur Ankopplung mehrerer Sensoren an das BUS-System, mit Sensorelektroniken, die ohne Zwischenschaltung einer Schnittstelle direkt mit der Slave-Anschaltung verbunden sind und an die jeweils ein Sensorkopf zur Realisierung eines Sensors elektrisch ankoppelbar ist.

Ein Ausführungsbeispiel der Erfindung wird im folgenden anhand der FIG 1 näher erläutert.

FIG 1 zeigt einen Mehrfachsensor 1 gemäß der Erfindung, der z.B. über ein BUS-System 2, insbesondere eine ASI-Zweidrahtleitung (**A**ktuator-**S**ensor-**I**nterface), von einem hier nicht dargestellten Master angesteuert wird. Der Mehrfachsensor 1 umfaßt im wesentlichen eine Slave-Anschaltung 3, die beim ASI-System bekanntermaßen durch einen speziellen ASI-Chip als intelligente Elektronik realisiert ist, sowie mehrere Sensorelektroniken 4, die unmittelbar mit der Slave-Anschaltung 3 verbunden sind. Die Slave-Anschaltung 3 und die Sensorelektroniken 4 sind vorzugsweise in einem gemeinsamen Gehäuse 5 untergebracht. Jede Sensorelektronik 4 ist mit einem ihr zugeordneten ausgelagerten Sensorkopf 6 über eine elektrische Leitung 7 verbunden. Zur elektrischen Ankopplung der Sensorköpfe 6 ist am Gehäuse 5 eine elektrische Schnittstelle 8 vorgesehen, die ausschließlich an die angeschlossenen Sensorköpfe 6 angepaßt ist. Die Sensorköpfe 6 können z.B. eine Spule oder einen Oszillator eines induktiven Sensors enthalten. Unter Slave-Anschaltung 3 wird hier eine Funktionsblock-Struktur eines ASI-Slave verstanden, wie sie aus der eingangs erwähnten Literaturstelle (siehe Bild 3.2, Seite 50) bekannt ist.

Obwohl die vorliegende Erfindung unter Bezugnahme auf die in der beigefügten Zeichnung dargestellte Ausführungsform erläutert ist, sollte berücksichtigt werden, daß damit nicht beabsichtigt ist, die Erfindung nur auf die dargestellte Ausführungsform zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Mehrfachsensor (1) zum Anschluß an ein BUS-System (2), insbesondere ein AS-Interface, mit einem Gehäuse (5), das eine Slave-Anschaltung (3) und eine elektrische Schnittstelle (8) aufweist, und mit ausgelagerten, an die Schnittstelle (8) angeschlossenen Sensorköpfen (6), wobei die elektrische Schnittstelle (8) ausschließlich an die angeschlossenen Sensorköpfe (6) angepaßt ist.

2. Mehrfachsensor nach Anspruch 1, **dadurch gekennzeichnet,** daß mit den Sensorköpfen (6) verbundene Sensorelektroniken (4) zumindest teilweise im Gehäuse (5) untergebracht sind.

3. Mehrfachgehäuse nach Anspruch 1 oder 2, **dadurch gekennzeichnet,** daß die Sensorköpfe (6) mit dem Gehäuse (5) über elektrische Leitungen (7) verbunden sind.
